(19) Europäisches Patentamt
European Patent Office
Office européen des brevets

(11) EP 2 221 592 A1

(12) EUROPEAN PATENT APPLICATION

(43) Date of publication:
**25.08.2010 Bulletin 2010/34**

(21) Application number: **09151152.7**

(22) Date of filing: **22.01.2009**

(51) Int Cl.:
***G01K 11/06*** *(2006.01)*
***G01K 11/16*** *(2006.01)*
***G01N 31/22*** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Stichting Dutch Polymer Institute**
**5612 AB Eindhoven (NL)**

(72) Inventors:
- **Broer, Dirk J.**
**5663 SE, Geldrop (NL)**
- **Han, Y.**
**5612 WP, Eindhoven (NL)**
- **Van Oosten, Casper Laurens**
**5611 NR, Eindhoven (NL)**
- **Nowak, Daniel Adalbert**
**36304, Alsfeld (DE)**
- **Sijbensma, Rintje Pieter**
**5212 AS, 's-Hertogenbosch (NL)**
- **Teunissen, Jean-Pierre**
**6014 AE, Ittervoort (NL)**
- **Bastiaansen, Cornelis Wilhelmus Maria**
**6065 EE, Montfort (NL)**
- **Pacheco, Katherine**
**5641 PR, Eindhoven (NL)**

(74) Representative: **Renkema, Jaap et al**
**Ipecunia B.V.**
**P.O. Box 593**
**6160 AN Geleen (NL)**

(54) **Multifunctional optical sensor**

(57) The invention relates to a multifunctional optical sensor comprising a substrate and a polymeric layer comprising polymerized liquid crystal monomers having an ordered morphology, wherein the color, the reflectivity or the birefringence of the sensor changes due to a change of the morphology, wherein said change of the morphology is caused by physical contact with a chemical agent such as a gas or liquid a change of temperature, or passage of time. The invention also relates to a process for the preparation of the sensor and for the use of a film comprising a single substrate, a layer having a cholesteric liquid crystalline structure for application in labels for packaging of perishable goods, food, fine chemicals, bio-medical materials.

EP 2 221 592 A1

## Description

The invention relates to an optical sensor for determination of a change of temperature or the presence of certain chemical components.

Optical sensors for determination of a temperature change are known in the art. For example US 4,410,283 discloses a cholesteric liquid crystal and a temperature detecting device entailing the use of the liquid crystal material. GB 1.183.160 discloses a chemical thermometer comprising a number of parallel cells filled with materials which change its appearance at respective threshold temperatures different for each cell. The temperature sensitive materials are hysteretic cholesteric liquid crystalline materials which change from a green color to colorless at the threshold temperature. This sensor is not reversible. Another temperature sensor is disclosed in US 3,651,695. These optical sensors apply liquid crystalline materials that are protected by a plastic film, or embedded in such a matrix. Sealing of the liquid crystalline materials is very important. These optical sensors are only suitable for temperature detection. Furthermore the sensors can respond to one single input parameter only, being change of temperature.

Optical sensors that detect chemical components are also known in the art. For example US 4,597,942 discloses a device to indicate the concentration of ethylene oxide. The presence of ethylene oxide causes a color change of a polymeric film comprising liquid crystalline material. The liquid crystalline coating formulations are prepared by melting cholesteric esters, which are then combined with a suitable binder and solvent. Alternatively the liquid crystalline materials are microencapsulated in polymeric material. The sensor can be used for a single input, being a certain chemical compound. The sensor cannot be applied in food applications and is expensive to produce.

Kirchner etal in Chem.Commun. 2006, 1512-1514 disclose a functional liquid crystalline film prepared from low molecular weight cholesteryl derivatives mixed into a polymer like PMMA or a polyurethane hydrogel. The film recognizes amine vapours and changes colour upon interaction with these amines. The sensor can be used for a single input, being a certain amine compound. The sensor cannot be applied in food applications because part of the sensor composition may leach to the food and the sensor is expensive to produce. This sensor is also irreversible.

A color changing cholesteric polymer film is known from Macromolecules 2006, 39, 3986-3992, by Shibaev etal, wherein a hydrogen bonded thermotropic liquid crystal responds to the presence of some amino acids in water by changing color and shifting the wavelength of the selective reflection band. The polymeric film is made from reactive cholesteric liquid crystals. The film is prepared between two glass plates and the sensor is obtained by removing one of the glass plates. The sensor can be used as a monofunctional sensor, and its preparation is laborious and can only be performed on a small scale. Furthermore the sensor can be used for one single input only and is irreversible.

There is a need for a sensor that can show a response to multiple input parameters.

Preferably such a sensor is easy to produce, and therefore is cost effective. It is also preferred that such a sensor is suitable to be used in packaging-applications for perishable or sensitive contents such as food, as control for freshness, temperature history, presence of certain chemical compounds and the like. The sensors are preferentially irreversible i.e. they store the whole history of the environment where the product has been in.

The present invention relates to a multifunctional optical sensor comprising a substrate and a polymeric layer comprising polymerized liquid crystal monomers having an ordered morphology, wherein the color, the reflectivity or the birefringence of the sensor changes due to a change of the morphology, wherein said change of the morphology is caused by physical contact with a chemical agent such as a gas or liquid a change of temperature, or passage of time.

In a preferred embodiment of the invention, the ordered morphology is a cholesteric morphology and the optical sensor can show a response to at least 3 different input variables, such as for example temperature, amines and carbon dioxide.

In one embodiment, the sensor comprises multiple areas having different cholesteric or birefringent morphologies or molecular compositions, having different sensing functions.

In one embodiment of the invention, the sensor can react in a reversible way to stimuli. In another embodiment of the invention the sensor acts as an indicator, which gives a response that cannot be fully reversed.

In another embodiment the sensor comprises an area with a cholesteric morphology or birefringent morphology, wherein the change of the optical properties of that area is different for different molecules that are absorbed by the sensor area.

FIGURES

Figure 1. A schematic illustration of the change of a cholesteric network order. For clarity reasons, the polymer backbone is not drawn. The network can shrink (I), lose its order (II) or swell (III) (see (a). A schematic of the corresponding changes in transmission of isotropic light is shown in graph b.

Figure 2. Relation of the reflection band (nm) as a function of temperature of comparative example 1.

Figure 3. Example of a multifunctional sensor.

Figure 4. Representation of a sensor according to example 2.

Figure 5. Transmission of right handed circularly polarized light through the sample of example 2 after time/heat treatment.

Figure 6. Reflection of light before and after treatment of a sample with trimethyl amine (example 2).

Figure 7. Reflection of light before and after treatment of a sample with bipyridyl (example 2).

Figure 8. Reflection of light before and after treatment with water (example 2).

Figure 9. Example 2 after compression with stanpins.

Figure 10. Effect of locally heating of a sensor (example 2).

Figure 11. Effect of laser writing on a sensor (example 2).

Figure 12. $^{1}$H-NMR and FTIR spectra of $CO_2$ active sensor (example 4).

Figure 13. $^{1}$H-NMR spectra of a Taddol-diamine complex.

Figure 14. Reflection of chiral nematic reflectors before and after vitamin E acetate sensing.

Figure 15. Reflection of a sensor with aspirin before and after heating.

DETAILED DESCRIPTION OF THE INVENTION.

The sensor according to the present invention is an optical sensor, which means that the sensor shows a first color, a first reflectivity or birefringence before reacting to a certain input, and the sensor has a second color, reflectivity or birefringence which differs from the first color, reflectivity or birefringence after exposure to a certain input. This change of color or reflectivity can be observed with the eye, or by optical detection methods, directly or indirectly for example by use of one or more linear or circular polarization filters.

The sensor of the present invention is multifunctional, which means, that the sensor has at least 2, preferably 3, more preferably 4 areas which independently react to different input parameters, like for example amines, sulfides, phosphides, CO, $CO_2$, NO, $NO_2$ , water, humidity, pH, oxygen, temperature, passage of time, and the like. Typically the sensor has not more thn 10 different functionalities, in a preferred embodiment the sensor has between 5 and 7 functionalities.

The sensor of the invention comprises a polymeric layer that comprises polymerized liquid crystal monomers that have an ordered morphology.

Preferably the sensor comprises multiple areas having different compositions or morphologies which have different sensing functionalities. One single area may also respond to different inputs, like for example a range of different chemicals or for example a specific chemical and a change of temperature.

In a preferred embodiment of the invention, the sensor comprises a substrate. One side of the polymeric layer is preferably attached to the substrate, while the opposite side of the polymeric layer is free to interact with chemical compounds, temperature, humidity etc. In this embodiment the sensor comprises a substrate which is coated with a coating composition containing at least one liquid crystalline material comprising at least one polymerizable group, which coating composition is polymerized to obtain a polymeric layer on the substrate.

The sensor according to the invention will be able to respond to different stimuli, or it reacts to a change in the environment such as temperature or changes as a result of the passing of a certain time. It is believed that a reaction, absorbance or other change of the morphology of the ordered layer of the sensor will induce a change in optical properties of the sensor.

The polymeric layer has an ordered morphology. Examples of ordered morphologies are cholesteric, planar, splay/bend, tilted, twisted and homeotropic. For liquid crystals, the average alignment of the liquid crystalline units is defined as the director of the liquid crystal.

A preferred morphology is a cholesteric or planar morphology. In a cholesteric morphology, the director rotates through the thickness of the film, with the axis of rotation being perpendicular to the substrate. The length over which the director rotates 360° is defined as the cholesteric pitch. For short pitches, the cholesteric liquid crystal will reflect a portion of the light around central bandwidth $\lambda_o \equiv \overline{n}p$, where $\overline{n}$ is the average refractive index and $p$ is the pitch of the cholesteric. The width of the reflection band, $\Delta\lambda$, is determined by the birefringence ($\Delta$n) of the liquid crystal: $\Delta\lambda = \lambda_o \dfrac{\Delta n}{\overline{n}}$. A cholesteric liquid crystal will selectively reflect one (circular) polarization state of the incident light. If the reflection band of the cholesteric liquid crystal is in the visible region of the light, changes which occur within a cholesteric morphology can be viewed by the naked eye.

Three changes are possible:

1. a change of the cholesteric pitch from $p_1$ to $p_2$, where $p_1 < p_2$. This results in a redshift of the reflection band.

2. a change of the cholesteric pitch from $p_1$ to $p_2$, where $p_1 > p_2$. This results in a blueshift of the reflection band.

3. a reduction of the order of the system, resulting in a reduction of the birefringence $\Delta$n and thus the width of the reflection band, $\Delta\lambda$, reduces to zero. In effect, this leads to a disappearance of the reflection band.

A schematic illustration of these changes is available in figure 1.

Figure 1 shows a schematic illustration of a cholesteric network order. For clarity reasons, the polymer backbone is not drawn. The network can shrink (I), lose its order (II) or swell (III) (see (a)). A schematic of the corresponding changes in transmission of isotropic light is shown in graph (b).

Any of these changes is best visible when the cholesteric liquid crystal polymer is placed against a black background or against a scattering reflective background.

When the polymeric liquid crystalline film has a planar uniaxial alignment, the film has an optical birefringence. This birefringence causes the film to act as a retarder plate. The retardation ($\Gamma$) is determined by the birefringence ($\Delta$n), the wavelength of the light $\lambda$ and the pathlength $L$ of the light traveling through the liquid crystalline film: $\Gamma = 2\pi\Delta nL/\lambda$. When the reflected light is retarded by $\frac{1}{2}\pi + k\pi$ radians by the polymer LC structure, where k is any natural number (0, 1 , 2 ,...) and the film is on a reflective background, the structure will be visible with a single polarization filter oriented at 45° with the molecular director. If a colorless polymer is used, this same structure will be invisible without the polarization filter or with the polarization filter parallel to the molecular director. When the birefringence or thickness of the polymeric liquid crystal film changes, this change is visible using the polarization filter and the reflective background.

In case such a change in morphology is reversible, the sensor can be viewed as a reversible sensor. In case such a change in morphology is irreversible or requires specialized external action ('resetting'), the sensor may act as an indicator.

Irreversible change in morphology can occur for example when the polymerized liquid crystalline monomers contains breakable secondary bonds that are breakable by interaction with a substance (like for example an amine, oxygen, carbon dioxide or the like), whereby the structure or the order of the polymerized layer changes. Examples of breakable secondary bonds are H-bonds.

Preferably the sensor comprises multiple areas having different cholesteric or birefringent morphologies or compositions which have different sensing functionalities.

Preferably the sensor changes color by shift of the reflection band to either lower or higher wavelengths by at least 5% of the central reflective wavelength. Preferably such a shift is at least 10% of the central reflective wavelength.

In another embodiment the sensor shows a decrease of reflectivity of at least 10% upon interaction with a chemical agent, or change of temperature or time.

The substrate used in the present invention can be any inorganic or organic material. Preferentially, the substrate is a black substrate, a reflective substrate or a transparent substrate. Preferably the substrate used in the sensor of the present invention is a flexible substrate. In a preferred embodiment, the substrate is treated such that it induces an ordered alignment of the liquid crystal monomers that are applied to the substrate.

For example such treatment can be buffing or rubbing of the substrate material directly. In case the substrate material is cellulose triacetate, buffing will induce an in-plane alignment of liquid crystal monomers at the substrate interface.

In another embodiment, the substrate can be treated with an alignment inducing layer. This layer is applied to the substrate and then treated to induce the desired molecular ordering. An example of such alignment inducing layer is a polyimide layer. The polyimide can be applied to the substrate by coating from solution and consequently crosslinked at elevated temperatures. As a final step, the polyimide layer is buffed to induce the desired alignment. A second example

of such alignment inducing layer is a photoalignment layer. In this case, an exposure to (linearly polarized) light is performed to induce the desired alignment. A third alternative for the alignment inducing layer is to use alignment materials which induce a homeotropic alignment and buffing (rubbing) or exposure to polarized light is completely omitted.

The polymeric layer is generally prepared by polymerizing a composition containing at least one liquid crystalline material comprising at least one polymerizable group. Preferentially, the liquid crystals are thermotropic liquid crystals. Preferably, at least part of the liquid crystalline material contains two or more polymerizable groups. Such liquid crystalline materials containing one or more polymerizable groups are considered to be monomers. The liquid crystal molecules are preferably brought into their liquid crystal phase prior to the polymerization. In this phase, the molecular ordering is controlled by the composition of the liquid crystalline material, the conditions of the interfaces, the temperature and any external fields that may be applied to the layer. This controlled order can be preserved during the polymerization of these monomers. Polymerization causes such an orientation to be frozen as it were by forming a cross-linked polymeric network. One way to perform this polymerization is to use a photopolymerization. It is noted that such a mixture may additionally comprise non-reactive (liquid-crystalline) materials and/or non-liquid-crystalline monomers and/or solvents.

For the reactive group use can be made of groups like for example acrylate, methacrylate, epoxy, vinyl, vinylether, thiol-ene and oxetane. However, use is preferably made of reactive groups in the form of (meth)acrylate groups. Monomers comprising a(n) (meth)acrylate group proved to be excellently processable.

In principle, the monomers can be thermally polymerized. In practice for the present invention, radical-polymerization under the influence of electromagnetic radiation or actinic radiation, in particular UV light is the best way of polymerizing the monomers in of the process of the present invention. This has the advantage that persons skilled in the art have the freedom to work at temperatures which offers the best performance in coating behaviour and preferred liquid-crystalline properties.

Liquid-crystalline monomers which can be used within the scope of the invention correspond for example to the general formula

A-B-M-(B)-(A) (1)

In this formula (1), M represents a group whose chemical structure and rigid conformation cause the molecule to become highly anisotropic. Suitable M groups are disclosed, inter alia, in USP 4,398,803 and WO 95/24454. B represents a so-called spacer group. The spacer groups can be attached at the long end of the M group, or at the side of the M group, for the so-called 'side on' liquid crystals. Dependent upon the desired properties, the monomers used comprise one or two spacer groups. Spacer groups are also known from the above-mentioned patent publications. A represents a reactive group of the above-mentioned type. The liquid-crystalline molecules may comprise one or more reactive groups. As stated above, a part of the liquid-crystalline molecules in the mixture may be non-reactive. In that case, these molecules do not comprise A-type groups.

The mixture to be polymerized also comprises monomers having two or more reactive groups of the above-mentioned type. The presence of monomers having two or more polymerizable groups is important for making a polymer network after polymerization. During polymerization, the presence of such monomers leads to the formation of a polymer network. This causes the inventive oriented layer or structure to become mechanically stable.

The monomers comprising at least two polymerizable groups preferably comprise a liquid-crystalline group.

Alternatively monomers having one or more, preferably two or more polymerizable groups may be present that are absent of a liquid crystalline group. Their presence may be helpful for lowering viscosity of the coating composition, improvement of mechanical properties of the cured film, change of network crosslink density, help obtain the desired morphology and the like.

Examples of reactive monomers having at least two crosslinking groups per molecule include monomers containing (meth)acryloyl groups such as trimethylolpropane tri(meth)acrylate, pentaerythritol (meth)acrylate, ethylene glycol di(meth)acrylate, tetraethylene glycol di(meth)acrylate, polyethylene glycol di(meth)acrylate, 1 ,4-butanediol di (meth)acrylate, 1 ,6-hexanediol di(meth)acrylate, neopentyl glycol di(meth)acrylate, polybutanediol di(meth)acrylate, tripropyleneglycol di(meth)acrylate, glycerol tri(meth)acrylate, phosphoric acid mono- and di(meth)acrylates, C7-C20 alkyl di(meth)acrylates, trimethylolpropanetrioxyethyl (meth)acrylate, tris(2-hydroxyethyl)isocyanurate tri(meth)acrylate, tris(2-hydroxyethyl)isocyanurate di(meth)acrylate, pentaerythritol tri(meth)acrylate, pentaerythritol tetra(meth)acrylate, dipentaerythritol monohydroxy pentacrylate, dipentaerythritol hexacrylate, tricyclodecane diyl dimethyl di(meth)acrylate and alkoxylated versions, preferably ethoxylated and/or propoxylated, of any of the preceding monomers, and also di (meth)acrylate of a diol which is an ethylene oxide or propylene oxide adduct to bisphenol A, di(meth)acrylate of a diol which is an ethylene oxide or propylene oxide adduct to hydrogenated bisphenol A, epoxy (meth)acrylate which is a (meth)acrylate adduct to bisphenol A of diglycidyl ether, diacrylate of polyoxyalkylated bisphenol A, and triethylene glycol divinyl ether, adduct of hydroxyethyl acrylate, isophorone diisocyanate and hydroxyethyl acrylate, adduct of hydroxyethyl acrylate, toluene diisocyanate and hydroxyethyl acrylate, and amide ester acrylate.

In one embodiment of the invention, the sensor shows a Bragg reflection. To obtain a Bragg reflecting sensor,

a cholesteric polymer can be used to prepare the sensor. One way to obtain a cholesteric polymer is to use liquid crystalline monomers that form a cholesteric phase by themselves. Alternatively, a chiral dopant can be added. A chiral dopant is a monomer that is added in small concentrations to induce a chiral order of the monomeric LC mixture. In that case, the pitch (*p*) of the cholesteric at a certain temperature is determined by the concentration of the chiral dopant (*c*), the enantiomeric excess (*ee*) and the helical twisting power (HTP) of the chiral dopant for the liquid crystal host: $p \equiv (HTP \cdot c \cdot ee)$.

The chiral dopant may have one or two functional groups such that it can react to become part of the polymer network. An example of a bifunctional chiral dopant is

(2)

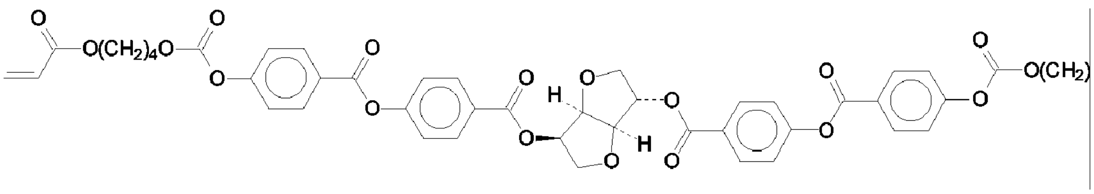

Alternatively, a chiral dopant may be used that has no additional functionality, for example:

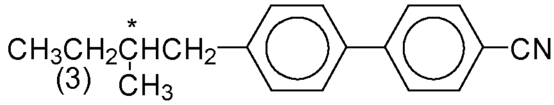

(3)

Another option is to use chiral dopants that change their molecular conformation or structure in response to a change in the environment. Preferentially, gas sensitive parts of the sensors can be made using such active dopants. Different classes of active dopants are distinguished: dopants that change their non-covalent interactions with other molecules and dopants that undergo a breaking and reformation of covalent bonds in response to a change in the environment.

One example of the class of active dopant based on non-covalent bonds is a molecule that complexes with other components of the monomeric mixture to form a chiral complex. An examples is methyladipic acid (MAA) in combination with monomers with a carboxylic acid functionality:

(4)

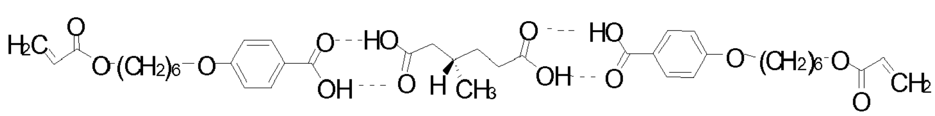

This complex will respond to gasses and liquids that are able to break the hydrogen bonds in the system.

Another example is the complexation of Taddol with diamine. Taddol is a non-systematic name of the class of molecules: (1,3-dioxolane-4,5-diyl)bis(diarylmethanol).

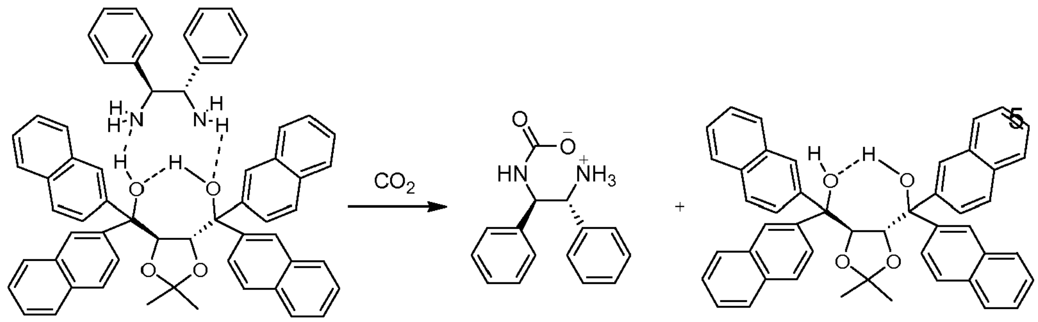


Complex (Taddol•diamine) Carbamate Taddol

(5)

A complex dopant formed by diamine and Taddol derivative at 1:1 molar ratio through hydrogen bonding gives a high helical twisting power. Taddol derivatives possess extremely high helical twisting power in many host liquid crystals. The complexation of diamine with Taddol decrease the twisting power of the latter, and exposure to carbon dioxide destroys the complex and leads to the recovery of Taddol.

An example from the class of active dopants based on breaking and reformation of covalent bonds is the oxygen sensitive chiral dopant 1,1'-binaphthalene-2,2'-dithiol. In the presence of oxygen and catalyst, the dithiol is oxidized to disulfides with a more coplanar conformation. The conformational change of the chiral dopant induces a change of the helical twisting power and the cholesteric pitch.

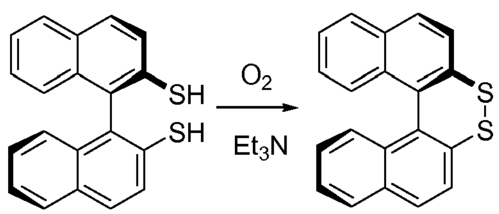


(6)

Dithiol Disulfide

Another example of an active chiral dopant based on breaking and reformation of covalent bonds is vicinal diamine. A chiral vicinal diamine derivative is used as carbon dioxide sensitive dopant. The reaction of carbon dioxide with diamine gives carbamate,

in which the formation of ion pair prevents the free rotation of the molecule around the central C-C bond. The conformational change following from that reaction causes a change from a low to a high twisting power.

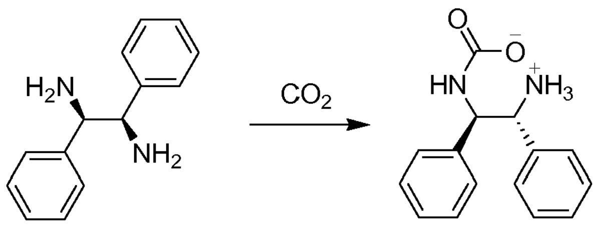


(7)

Diamine Carbamate

Also mixtures of monomeric compounds can be applied in the coating composition of the present invention. It may even be possible to use a solvent to improve processing characteristics of the monomeric compounds, for example for or during the application of the coating composition onto the substrate. This processing solvent preferably is removed before the irradiation of the coating composition. Examples of processing solvents are tetrahydrofuran, ethylacetate, butylacetate, toluene, xylene, dimethylformamide, dichloromethane, dichloroethane. Typical are amounts are between 0 and 1000 wt-%, preferably between 10 and 200 wt-%.

The sensor may contain a chiral dopant chosen from the the group consisting of a dithiol, preferably 1,1'-binaphthalene-2,2'-dithiol, a Taddol complex, or a chiral vicinal diamine.

**Sensing action**

A method to make a sensor which acts as an indicator is to use the glass transition temperature of the indicator. This method uses hot-embossing of the polymeric layer: the polymeric layer heated above the glass-transition temperature (Tg) of the liquid crystalline polymer. At the same time, the layer is locally deformed by compression or expansion. While the deforming input is kept on the layer, the system is allowed to cool to working temperature, below the Tg of the system. When the system reaches this temperature, the force is removed. Because the mobility of the polymer is reduced below Tg, the system will keep its deformed state. The rate at which the system relaxes back to the original state depends on the temperature and the location of the Tg of the system. When the temperature of the system passes the Tg again, relaxation to the original shape is fast. In case the liquid crystalline polymer has a cholesteric ordering, hot embossing (compression) leads to a reduction of the pitch p. Alternatively, when the liquid crystalline polymer has a planar uniaxial ordering, this leads to a shorter pathlength of the light through the polymer and a reduced retardation.

The Tg of the liquid crystalline polymer can be controlled through the composition of the monomeric mixture that is used to make the polymer. Typically, inclusion of molecules with a single functional (reactive) group will lower the Tg of a polymer compared to one that has only bifunctional monomers. Alternatively, plasticizers can be used. Suitable plasticizers are known to those skilled in the art and can be found in literature.

Another method to make an indicator is to use the evaporation of a component S out of the system. When the component S is in the system, it swells the system. A swollen system has a longer pitch (in the case of a cholesteric ordering) and longer pathlength for the light for the case with the planar uniaxial ordering. The component S evaporates as a function of time and/or temperature. Instead of evaporation of a component S out of a system, the converse can also be used: the system is swollen by a component S. The speed of such swelling or deswelling is strongly temperature dependent and therefore these systems can act as a time-temperature indicator. The component S can be any non-reactive molecule that can be dissolved in the system including molecules that are bonded to the network with secondary bonds. Examples of components S are non reactive liquid crystal molecules such as

(8)

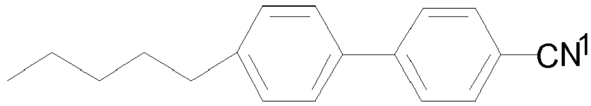
15

Other components S may be used that are not liquid crystalline by themselves, as long as they do not permanently destroy the order of the liquid crystal polymer. A special class of components S are nutritional additives. Nutritional additives are components S that are non-toxic for humans in small concentrations and that can swell the system or dissolve in the monomeric mix without destroying the liquid crystalline phase of the monomeric mixture. Because they are non toxic, they can be in safe contact with food. Examples of such nutritional components are vitamins and active and non-active medical compounds. A vitamin that is able to dissolve in a liquid crystal monomer mix in molecules are Vitamin E acetate (=*O*-Acetyl-$\alpha$-tocopherol). An example of a medical compound that can be dissolved in a monomeric liquid crystal mix without disturbing the order is acentylsalicylic acid (aspirin).

The concentration of the component S for a visible response is between 1 wt% and 50 wt%, preferentially between 5 wt% and 30 wt%, relative to the polymer.

When the system is swollen by a component or by a molecule that is bound to the network by secondary bonds, it may be removed by heating of the polymer. One way to locally heat a network is to use laser writing. Laser writing is possible when the energy absorption of the laserlight is higher that the thermal dissipation, resulting in local heating. It therefore may be beneficial to use dye molecules that absorb at the wavelength of the laser in order to increase the energy absorption of the polymeric film.

Another way to obtain a change in the order of the liquid crystalline polymer is through the inclusion of molecules that are capable of changing their shape or conformation through a reaction or isomerization. In these so-called 'guest-host' systems, the active molecules (the guests) influence the molecular order of the liquid crystalline units (the host). The change in shape or conformation may be caused by external agents (gasses, liquids) or a change in the environment such as light or temperature. By changing the molecular order, the birefringence of the LC polymer structure changes. For sensing purposes, this change can be made visible using a cholesteric molecular alignment or in a planar uniaxial alignment in combination with a polarization filter. In the case the polymer is a cholesteric polymer, the shape-or conformation changing molecule may be the chiral dopant or may be another guest molecule.

Another way to obtain a change in the morphology or thickness of the LC polymer structure is based on the observation that the ordering of the monomeric units in a liquid crystalline network, containing breakable bonds, changes when these bonds are broken after being brought in contact with an agent that interferes specifically with the breakable bonds. Breakable bonds in this context are bonds that can be reversible broken and formed in the presence and the absence of a reagent. Breakable bonds can be secondary bonds like hydrogen bonds. But it can also be even weaker bonds based on dipole-dipole interactions or dipole-induced dipole interactions between molecules. However the bonds must be strong enough to enable the formation of an ordered liquid-crystalline phase at the temperature range of interest. In this context, a secondary bond refers to a bond that involves attraction between molecules but that does not involve transfer or sharing of electrons. Another type of breakable bond that can be opened reversibly in the presence of a reagent are for instance primary bonds with higher binding strengths such as ionic bonds. In contrast, for example, primary bonds in the form of covalent bonds do not generally open reversibly. Covalent bonds are formed between atoms sharing electrons and are the building blocks for most organic compounds. They are stable and when opened with special reagents or temperature they seldom go back to the original structure. Secondary bonds such as hydrogen bridges are generally much weaker than primary bonds but are still strong enough to recombine when the conditions change and are therefore preferred in many embodiments. Ionic bonds are stronger but can be reversibly broken by a reagent that reacts even stronger with the cation or anion. Examples are salts that can be broken by the presence of an acid. The polymer networks that are used within the scope of this invention typically contain polymerized monomeric units that have the ability to undergo this reversible scission.

Breaking and restoring of secondary bonds can be identified and quantified using well known techniques such as Fourier Transform Infrared Detection (FTIR). A characteristic property of the optical structures in accordance with the present invention is thus that the application of an agent gives rise to anisotropic optical changes in the direction of the molecular orientation of the liquid crystal network. These anisotropic optical changes are driven by secondary bind breakages that are measurable using, for example, FTIR. H bridges is an example of a secondary bond, and polymerized liquid crystal monomers having H bridges has proven useful for the present invention. Hence, according to one embodiment, the breakable secondary bonds are H bridges in the polymerized liquid crystal monomers.

One mechanism that has been identified as giving rise to changes of optical properties upon application of an agent is polymerized monomers that make place for and incorporate molecules of the agent into monomer portions at

the place of the broken secondary or ionic bonds, and thus to push the broken portions of the monomeric units apart resulting in a morphology change of the polymer. Hence, according to one embodiment, the polymerized liquid crystal monomers are changeable upon breaking of said breakable secondary bonds, such that breaking of said breakable secondary bonds results in an optical change driven by said agent in said polymerized monomers.

The change in the ordering of the monomeric units has proven to be dependent on the molecular structure and bonding capabilities of the agent. At least three factors play a role:

- the number of secondary bonds an agent molecule can form
- the strength of these secondary bonds
- the shape and size of the molecule

Agent molecules capable of forming two (or more) secondary bonds may give a different change in optical properties than agent molecules that can only form a single secondary bond. Typically agent molecules with two or more bonding capabilities may preserve the order of the system, whereas molecules with a single bonding capability mostly disturb the order. Furthermore, the optical response may depend on the type and strength of the secondary bond. For example, in the case monomeric units with carboxylic acid groups are used in the polymer, water may be able to hydrogen bond with the carboxylic acid groups and swell the polymer. This is a reversible swelling of the polymer, as the carboxylic acid to water bonding is weaker than the carboxylic acid with itself. When in the same polymer an agent with stronger H-bonding capability is introduced such as trimethylamine, the response is irreversible, as the carboxylic acid - amine bonds are stronger than the carboxylic acid with itself. Lastly, the response is agent selective in the rate of the response due the shape, size or other nature of the molecules. Small molecules will be able to permeate into the polymer layer faster than large molecules. Therefore, the optical response will be faster for the small molecules than for the large molecules.

A group of polymerized monomers that has proven useful is the group of polymerized monomers having the structure $R^1$-X-$R^3$, where $R^1$ and $R^3$ each comprise an acrylate or methacrylate group and X is a carboxyl group or pyridyl.

An example of one sensor element is a system comprising as agent $H_2O$ and as polymerized monomers have the following structure

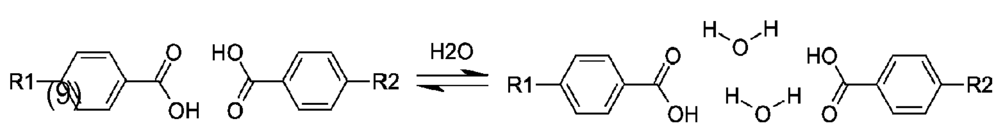

(9)

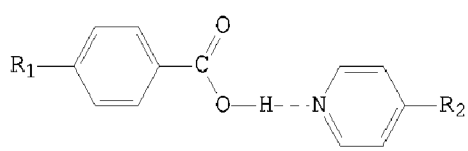

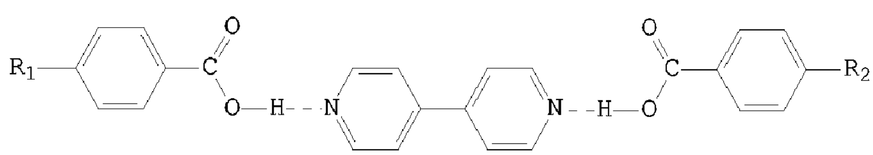

W here $R^1$ and $R^2$ each contain a group selected from an acrylate group and a methacrylate group.

The above formula provides an optically active structure that responds to water or water vapor in a direct and immediate way. Alternatively, the structure might react, when used in a fluid environment, to changes in salt concentrations or to changes in the acidity of the fluid medium (pH). According to one embodiment, as described above, the polymer liquid crystal is formed from a monomer that owes its liquid crystalline behavior to hydrogen bridges which form secondary

bonds that break in contact with water molecules. The polymer liquid crystal might, for example, have the structure and react as illustrated by Formula 9 above. An example of a suitable monomer is a molecule where $R_1$ and $R_2$ contain an acrylate group, e.g. $CH_2$=CH-COO-$(CH_2)_6$-O-, or a methacrylate group. In its monomeric state, in the absence of water, this monomer is liquid crystalline and can be processed to form an oriented liquid-crystalline network, for example by photo polymerization of the monomer while aligned between rubbed polyimide substrates. In the polymerized state, R1 and R2 are part of, or attached to, the polymer network. The same principle can be used for other types of hydrogen bridges, and other agents than water can be used for breaking the bonds. Examples of other ordered structures containing hydrogen bridges are based on carboxylic acid groups and pyridyl:

(10)

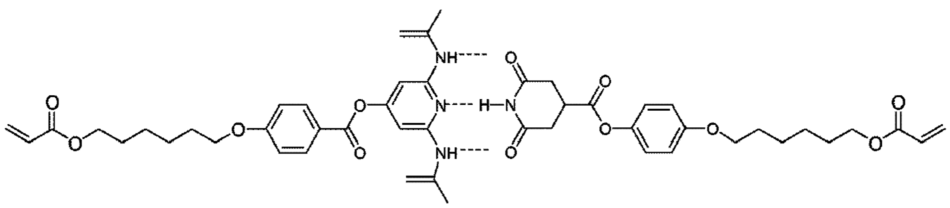

In general, the monome rs should have a liquid crystalline phase and should be polymerizable. Furthermore, the monomer must provide breakable bonds, for example in the form of a hydrogen bonding component. The following is an example of a monomer reacting to water: An alternative monomer that forms a dimer because of hydrogen bonding giving it its mesogenic (liquid crystalline) properties is given below:

(11)

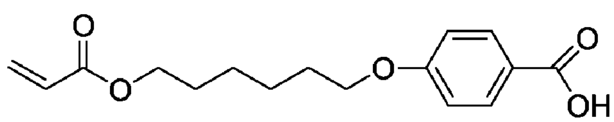

(12)

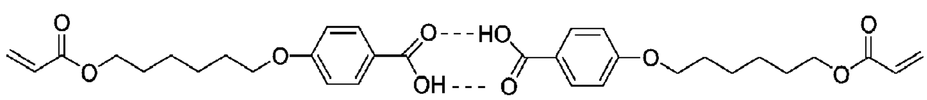

In this case a spacer (is the unit between the oxygen of the acrylate and the oxygen of phenyl group) length of six carbons has been chosen. However, there are many other examples with different number of carbon atoms, e.g. 3 or 11. Also mixtures are possible lowering the processing temperature.

The following compound (13) forms a liquid crystalline phase because the central molecule connects the two outer molecules by hydrogen bridges. These bridges are stronger than the ones based on carboxylic acids that are exemplified above. Note that for the formation of these bonds two different molecules are needed which preferably are added to the reactive mixture in a 1 :1 molar ratio.

(13)

Preferably this monomer "opens" with molecules that form energetically more favorable bonds such as strong acids rather than water alone. The agent can, for example, be p-toluene sulfonic acid. As an alternative, a three-molecule complex (14) can be chosen:

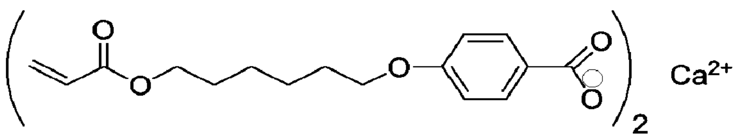

(14)

Also in this case strong acids can break the hydrogen bridges. However, when the central unit is removed from the polymer film (this can be done as soon as it is not attached no longer to the polymer network) a permanent volume change takes also permanently changing the optical reflection or the optical retardation of the film. An example of an ionic binding is given by the following salt:

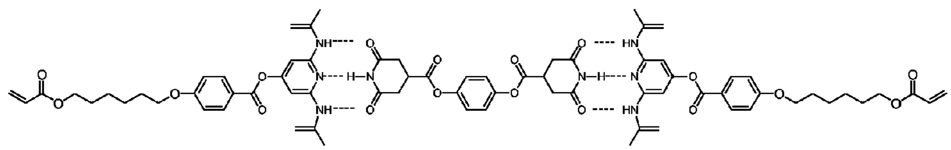

(15
)

Instead of Calcium also for instance Magnesium or Barium can be used. These ionic bonds can be broken by e.g. strong acids, such as -toluene sulfonic acid, hydrogen chloride, sulfuric acid, etc. as agent.

Reversibility of the response. The polymer network also, but not necessarily, may contain polymerized monomer units that exclusively are built up from covalent bonds and are polymerized into the network through at least two functional groups. These units do not undergo the scission reaction but contribute to the overall reversibility. An example of such a monomeric unit is given in Formula 16. These polymerized monomers are called shape-memory-monomers and are typically being used in concentrations between 0.1 and 100wt%.

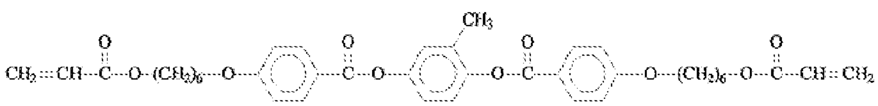

In case a sensory- function is desired rather than an Indicator function, a co-polymer providing breakable bonds and "memory" bonds, is advantageously used. In such cases, a shape-memory-monomer is typically added in an amount ranging between 0.1 and 30 wt-%. For example, the monomer specified by Formula 16 can be used as shape-memory-monomer, Using this shape- memory-monomer in a polymer network that is further built from the monomer In Formula 9, water can be used as agent for breaking hydrogen bridges, and, thus, for changing the optical properties. When the water is removed, due to the inclusion of a shape-memory-monomer in the polymerized co-polymer, the process of breaking and forming of hydrogen bonds is reversed and the film retains It original dimension and shape.

However, there are many monomers that could be employed as shape- memory-monomer. For example, in addition to the monomer given by Formula 16 itself, similar monomers can be applied, like for example monomers with carbon chains of lengths of 3-11. It is also possible to use monomers with a different number of benzene rings, and monomers having different connecting or reactive groups. The general requirement is that the monomer can be polymerizable on both ends (with e.g. acrylates, methacrylathes, or epoxies groups), it can be mixed with the liquid crystalline monomer, and preferably it is liquid crystalline before polymerization. Examples of polyfunctional liquid crystalline monomers can be found in literature.

However, rather than using polyfunctional monomers with mesogenic properties, also monomers can be used that are non-mesogenic. Examples of other monomers that can be used as shape-memory-monomer are hexanediol diacrylate, tripropyleneglycol diacrylate and trimethylolpropane triacrylate with the following respective structures (17):

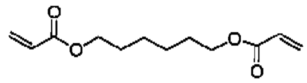

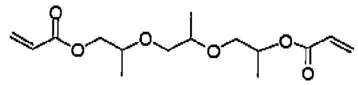

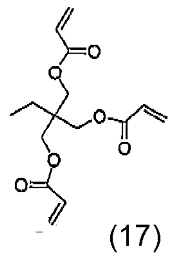

(17)

Furthermore, similar to the monomers (17), other functionalities can be applied as the polymerizable groups to make the polymer. Examples of such functionalities include methacrylates, vinyl ethers, epoxides, oxetanes, and thiol-enes.

The composition used in the process of the present invention may contain other components like for example inhibitors, retarders, RAFT agents and the like to further control the formation of active radicals to perform polymerization. These components will prolong the shelf life of the mixtures but it will also allow easier processing at elevated temperatures without premature polymerization. Moreover the addition of these components provides a means to adjust the UV dose threshold value for polymerization. Below the threshold dose no polymerization will take place while just above this dose the polymerization will proceed rapidly. The presence of a threshold UV dose supports the structure formation as aimed for in this invention disclosure. There are many polymerization inhibitors known to those who are skilled in the art.

Inhibitors, retarders and RAFT agents may be present in amounts from 0-20 wt% (relative to the total of the composition), or preferably between 0.1-10 wt%.

The invention also relates to a process for making the sensor of the invention.

In one embodiment of the invention the process for the preparation of a layer comprising oriented molecules on a substrate, comprises the steps of

a. providing a substrate having an alignment layer
b. applying a film of a coating composition on the substrate
c. optinally, buffing, rubbing, exposure to polarized light
d. forming a cholesteric liquid crystalline structure or an uniaxially aligned order or splay, or homeotropic on the film
e. applying a dose of electromagnetic radiation to the film or applying heat to at least partly cure the film.

Preferably the liquid crystalline material comprises at least two polymerizable groups.

In one embodiment of the process, the liquid crystalline material and the chiral compound are present in a single molecule. In another embodiment the chiral compound is present as a chiral dopant.

Preferably the oriented layer is a cholesteric layer, whereby the formation of the cholesteric structures as mentioned in step c, occurs through selfassembly and the cholesteric layer is a preferably a monodomain cholesteric layer.

The coating composition may contain additives like surfactants. Surfactants can support the process of selfassembly and the formation of monodomain cholesteric order.

The coating composition may be applied to the substrate with for example inkjet printing technology. Inkjetting is attractive because it allows for easy variation of the composition across the substrate by mixing inks, thus forming sensors for multiple inputs or for a larger range. The two main factors influencing print quality are stable droplet generation and formation of a monodomain aligned film from these droplets. The solvent and inkjet nozzle temperature greatly influence the droplet formation. The drop spacing of the printer is adjusted such that the deposited ink just flows and forms a homogeneous structure. The flow generated during the coalescence of the drops stimulates monodomain alignment of the liquid crystal.

Potentially other suitable printing techniques are micro contact printing, flexoprinting, offset printing, screen printing.

Micro contact printing is a technique where a soft stamp with relief patterns is used to form patterns of self-assembled layers of inks on the surface of a substrate through conformal contact.

Flexo printing (flexography) is a form of relief printing. A flexographic print is made by creating a positive mirrored

master of the required image as a 3D relief in a rubber or polymer material. A measured amount of ink is deposited upon the surface of the printing plate (or printing cylinder) using an engraved roll whose texture holds a specific amount of ink. The print surface then rotates, contacting the print material which transfers the ink.

Offset printing is a printing technique where the inked image is transferred from a plate to a rubber blanket, then to the printing surface. The offset technique employs a flat image carrier on which the image to be printed obtains ink from ink rollers, while the non-printing area attracts a water-based film, keeping the non-printing areas ink-free.

Screen printing is a printing technique that uses a woven mesh to support an ink blocking stencil. The attached stencil forms open areas of mesh that transfer ink as a sharp-edged image onto a substrate. A roller or squeegee is moved across the screen stencil forcing or pumping ink past the threads of the woven mesh in the open areas.

The application of a dose of electromagnetic indication may be performed by UV-radiation. The electromagnetic radiation may be applied through the application of a polarization hologram or through a lithographic mask.

The invention also relates to a process of locally varying the morphology of the polymerized liquid crystal layer of the present invention by the steps of:

a. heating the polymerized liquid crystal layer above the glass transition temperature of that layer and simultaneously applying a pressure locally on the polymerized liquid crystal layer
b. cooling the polymerized liquid crystal layer to below the glass transition temperature of that layer while simultaneously keeping pressure locally on the polymerized liquid crystal layer
c. removing the pressure from the polymerized liquid crystal layer

**Experimental part**

The following examples and comparative experiments are intended to illustrate the invention, without limiting the scope of the invention.

The following materials have been used in the experiments:

**Reactive LC monomers**

| | |
|---|---|
| C61BP | 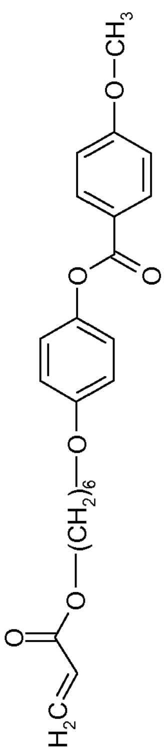 |
| C65BP | 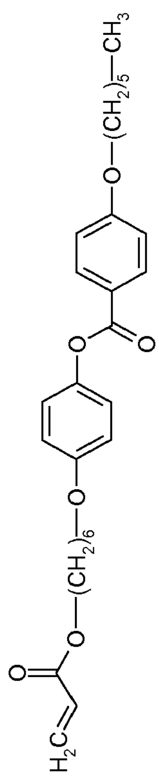 |
| C6H | 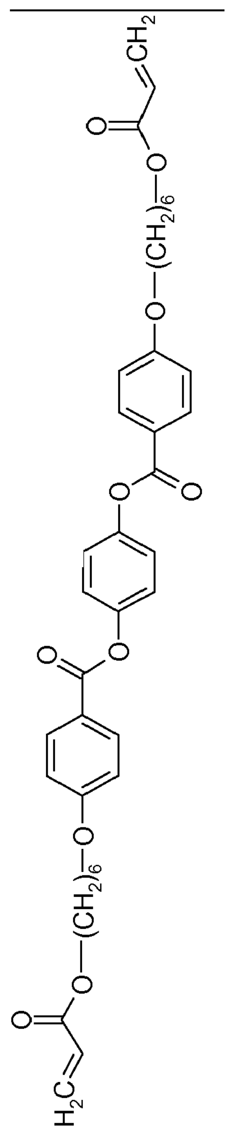 |
| C3M | 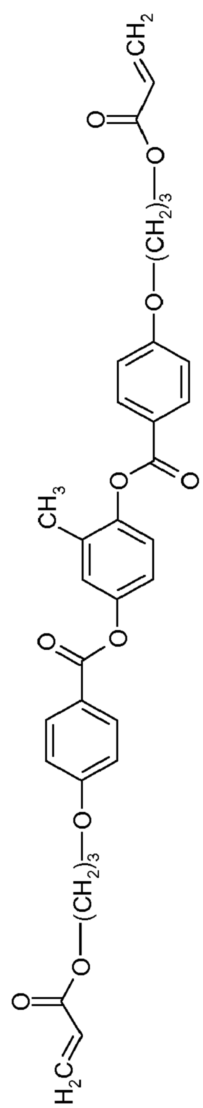 |
| C6M | 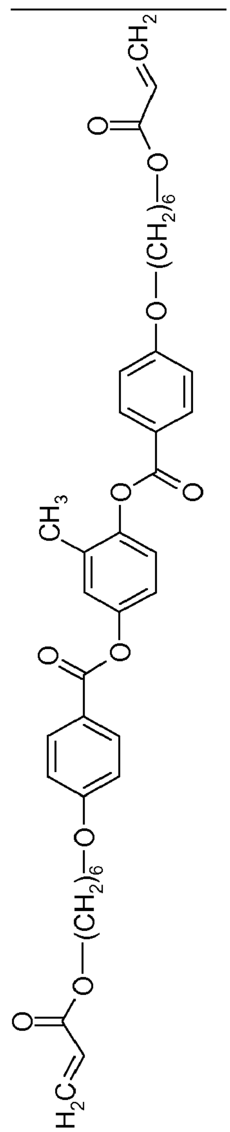 |

(continued)

| | |
|---|---|
| C11M | 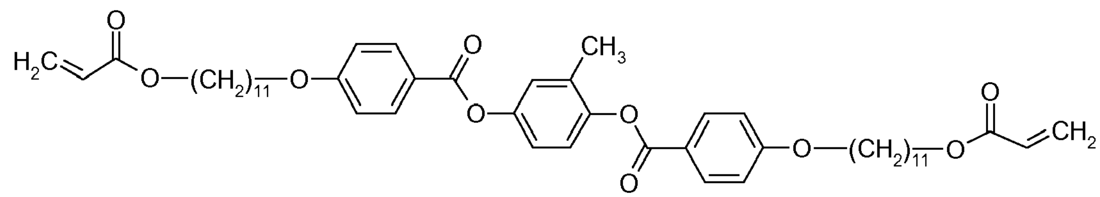 |
| nOBA n = 6,5,3 | 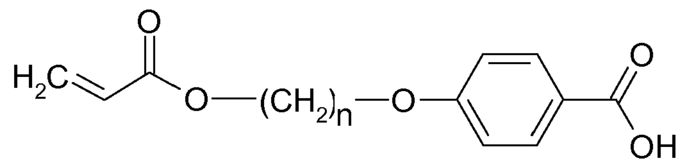 |
| 6OBA- M | 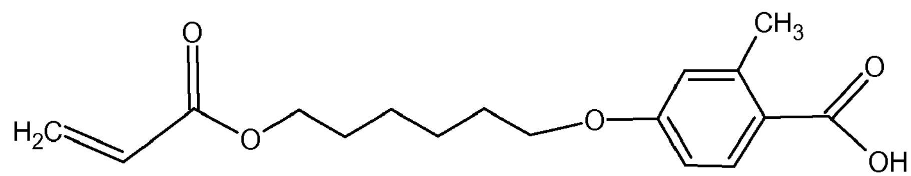 |

**Chiral dopant**

The chiral dopant (+)-MAA and nOBA molecules are able to connect with hydrogen bonds. The building of trimer structure is possible out of one (+)-MAA molecule in between two nOBA molecules connected to a polymer network by polyacrylates. (+)-MAA posseses no acrylate groups and will not be polymerized and bounded permanently to a polymer network.

R (+)- 3- Methyladipic acid

| | |
|---|---|
| (+) MAA | 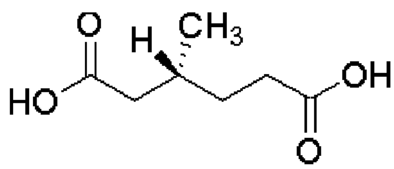 |
| CD1 | 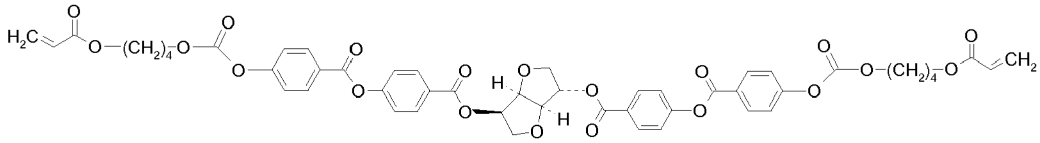 |

**Photoinitiators**

| | |
|---|---|
| Irgacure 819 (CIBA) | 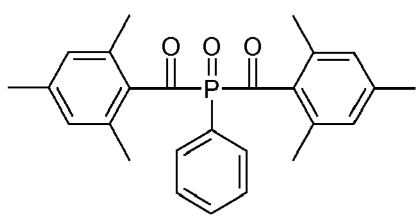 |
| Irgacure 369 | 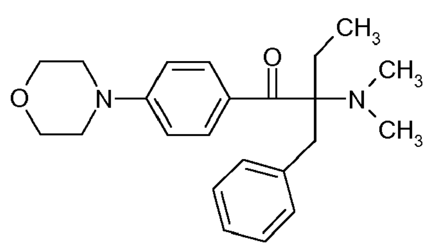 |

**Surfactant**

For planar alignment of liquid crystals on the surface of a single substrate a surfactant needs to be used. The used perfluorated molecule has the ability to align on top of the liquid crystal phase on the border to the environment.

2-(N-Ethylperfluorooctanesulfonamido) ethyl acrylate

| | |
|---|---|
| MP 8929 | 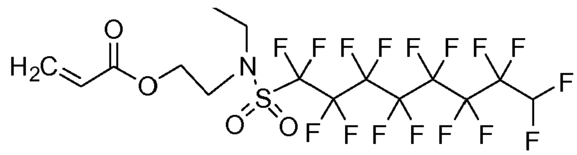 |

**Liquid crystal host material**

| | |
|---|---|
| E7 | 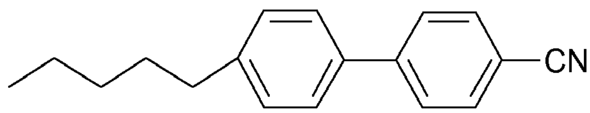 |

**Oxygen sensitive chiral dopant**

| | |
|---|---|
| 1,1'-binaphthalene-2,2'-dithiol | 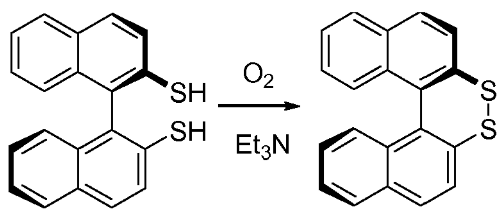<br>Dithiol Disulfide |

**Carbon dioxide sensitive chiral dopant**

| | |
|---|---|
| Vicinal diamine | 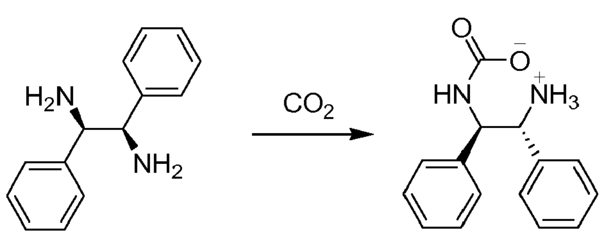<br>Diamine Carbamate |

(continued)

| Complex: Taddol•diamine | 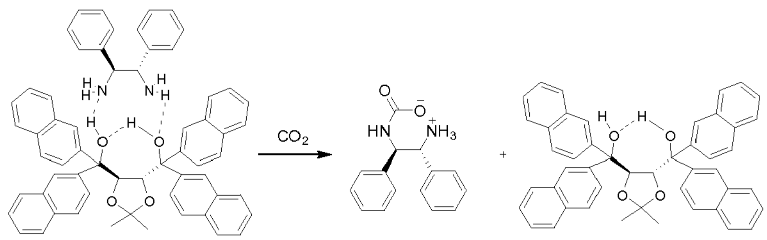<br>Complex (Taddol•diamine) Carbamate Taddol |
|---|---|

**Vitamin E acetate (=*O*-Acetyl-α-tocopherol )**

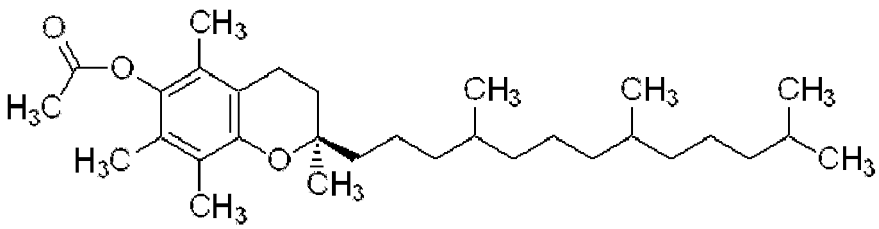

**Acetylsalicylic acid**

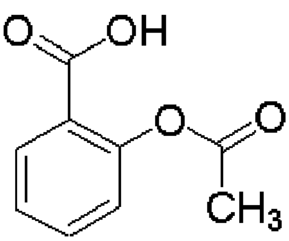

**Comparative experiment 1**

**Standard chiral film**

A cholesteric film is produced using the reactive liquid crystal C6M, chiral dopant CD1 (4-5 wt%), a radical photoinitiator (Ciba Irgacure 819) and planarization surfactant 2-(N-Ethylperfluorooctanesulfonamido) ethyl acrylate.

The reactive monomers are mixed in THF and spincoated on a glass substrate coated with a rubbed polyimide layer. The sample is then photocured in the nematic phase under nitrogen blanketing. Depending on the exact concentration of chiral dopant, a blue reflecting sample or green reflecting sample is produced. The central reflection wavelength is depicted in figure 2. When the sample is heated, a small change in the reflection band appears. The change is small (less than 30 nm) and occurs over a wide temperature range. There is no threshold temperature of the sensor. Also the change is small such that it is hard to distinguish by eye. Although this sample reflects part of the light and therefore

has a colored appearance, it is not possible to use it as an indicator: the response is reversible.

**Example 1**

Figure 3 shows an example of a sensor having 11 letters, which can respond to different stimuli. Certain letters of the sensor may change or even disappear upon reaction with chemicals, increase of temperature or lapse of time.

**Example 2**

A sensor is prepared having a single sensing area, that shows different responses to different types of input.
The sensor comprises a substrate and a sensing area prepared from a cholesteric mixture.

**Cholesteric mixture**

A typical cholesteric mix contains the components in the following ratios:

| | |
|---|---|
| C61BP | 24 wt% |
| C6M | 18 wt% |
| 6OBA | 19 wt% |
| 6OBA-M | 19 wt% |
| (+)MAA | 19 wt% |
| MP8929 | 0.5 wt% |
| Irgacure 369 | 0.5 wt% |

**Solvent**

For preparation of the mix and in the inkjet printing, THF was used as a solvent.

**Preparing glass substrates**

Glass plates were cleaned with ethanol using an ultrasonic bath for 15 min to remove small dirt particles. After cleaning, the glass plates have been placed into an UV-ozone oven for 20 min to improve surface wetting. Such treated glass plates were spincoated with polyimide (JSR 3046) in a two step cycle 1000rpm for 5 sec and 5000rpm for 40 sec. The spincoated samples were then placed on a hotplate (80-90˚C) for 5 minutes and then placed in a vacuum oven (190˚C) for 1 hour. After this treatment the glass substrates were cooled down to room temperature. To introduce planar alignment the PI coated glass samples were rubbed with a velvet cloth (5-7 times) in one direction.

**Spincoating and Curing**

The dissolved mixtures were spincoated on the single glass substrates. Spincoating speed and time was varied to get a homogenous coating. In general the spincoating time was in a range of 20-40 sec and the speed 2000-4000rpm, to achieve a film thickness of 3 - 6 $\mu$m. After spincoating a mixture on top of the aligned PI-substrate the sample was heated for 3-5 min to 80˚C to evaporate all solvent and leave the LC-mixture time to align on the substrate.
To cure the reactive LC film, the sample is placed in a nitrogen atmosphere and illuminated with UV-light for 30 sec. The curing temperature depends on the nematic LC-mesophase of the used mix and can be in a range of 20˚C to 50˚C.

**Inkjetprinting**

Single substrates have been prepared by inkjetprinting. The inkjetcartridge was filled with a liquid crystal mix in solution. The nozzle and the substrate are kept at elevated temperatures to avoid crystallization. As a printing substrate rubbed planar TAC (tri-acetylcellulose)-foil was used or coated glass slides. One or also multiple layers of the liquid crystal mix can be printed. After printing the solvent is evaporated, the printed sample was placed in a nitrogen atmosphere and was illuminated with UV-light for 30 sec at elevated temperature.

**Curing temperature**

When the material is cured just above the crystalline - nematic transition, variation of the polymerization temperature by a few degrees leads to a large change in pitch. In figure 4, prints were cured at tree different temperatures (35 ˚C, 32 ˚C and 33 ˚C) to give blue (top row of b), red (middle row of b) and green (bottom row of b) reflecting cholesteric network. The top part (a.) shows the original print bitmap, the bottom part (b.) shows the resulting prints.

**Response to time and heat**

The systems respond to both heating and time. Until 120 degrees, the response is very slow. Above 120 degrees, the response is fast and large. Therefore, this system can act as a time-temperature indicator. The figure 5 shows the transmission of right handed circularly polarized light through the sample.

**Response to amines**

To demonstrate the response to volatile amines, green reflecting cholesteric films were treated with trimethylamine (TMA) fumes at room temperature, caused by a 45% aqueous solution of TMA. UV-vis measurements (fig. 6) show that the reflection band of a green cholesteric sample which was kept over TMA fumes shifts to shorter wavelengths. The network is swollen by the TMA and a slight red shift is visible. The order of the network is not completely lost due to the presence of the permanent crosslinkers. A short dip in the TMA solution results in further loss of the order and a large red-shift, probably due to a combination of water and TMA swelling the network. Dipping the film in the TMA solution does result in loss of part of the MAA: when the system is dried, the reflection is partially recovered, accompanied by a blue shift compared to the original situation.

A sample was first heat-treated to remove the MAA. Consequently it was treated with an aqueous solution of 1wt% 4,4' dipyridyl in demineralized water at 60˚C. UV-vis measurements show a shift (- 40 nm) of the reflection band towards higher wavelength after treatment with amine solution (fig. 7). There is only a small decrease in order visible, significantly less than for the TMA.

As a control, the effect of pure water was tested for samples with MAA and without MAA. In both cases, the response was minimal (figure 8). The changes in the reflection band in figure 7 can thus be ascribed to the presence of the gaseous TMA and the dipyridyl. This shows that the network is in effect capable of sensing gas and chemical agents and that the response is agent specific.

**Pressure experiments:**

A red sample was heated to 80˚C and compressed with a stamp (pressure 130 MPa), the pressure was not released until the sample cooled down to room temperature. Because of this setup the sample is compressed above its glass transition temperature when it is easy deformable. Because of decreasing the temperature underneath the glass transition temperature while still applying pressure, the sample can be permanently deformed. The part of the sample, where the pressure had been applied shifted the color from red to blue.

When this sample was again heated above its glass transition temperature, the forced deformation could be released and the blue color shifted back to red (fig. 9). This experiment could also be repeated with green cholesteric samples.

**Local heating by laser:**

To apply local heating on the sample a UV laser (351 nm) was used. The laser settings were: 0.5 watts for 60 seconds. Samples were placed directly after shutter and the spot size was 1 mm. A green sample with the height of 7,8 μm was locally illuminated causing a irreversible change of the color from green to blue, which is equivalent to previous results in heating cycles. The height of the sample decreases about 1,5 μm (fig. 10), which equals approximately 19% of height and the amount (weight percentage) of used chiral dopant.

Figure 11 shows a pattern obtained by pulsed laser write up.

**Example 3**

A sensor is prepared which has an area responsive to oxygen. The sensor comprises the liquid crystalline material E7 and as oxygen sensitive chiral dopant 1,1'-binaphtalene-2,2'-dithiol.

In the presence of oxygen and catalyst $Et_3N$, the dithiol was oxidized to disulfides with a more coplanar conformation. The conformational change of the chiral dopant induces a change of the helical twisting power and the

cholesteric pitch.

**Cholesteric mix**

A typical cholesteric mix contains the components in the following ratios:

| | |
|---|---|
| Chiral dopant | 6 wt% |
| E7 | 94 wt% |

**Response to oxygen**

The oxygen sensitive chiral dopant was oxidized using triethylamine as catalyst in ambient condition in E7 host. The mixture used for the oxidation experiment was at a dopant concentration of 10 wt%. The conversion of the dithiol to disulfide was monitored by TLC. A complete conversion was observed after addition of catalytic amount of triethylamine into the mixture. The formed disulfide was separated in a 96% yield. This confirmed the effectiveness of using dithiol to sense oxygen.

**Example 4**

A sensor is being prepared that is sensitive to carbon dioxide.
The sensor comprises E7, vicinal diamine and the Taddol diamine complex.

**Response to carbon dioxide**

The reaction of vicinal diamine with $CO_2$ in solution was studied by saturating the solution with $CO_2$. The formation of carbamate was confirmed by $^1$H NMR and FTIR spectra (Figure 12). As indicated in the NMR spectra, the change of chemical shift and split of the peak were attributed to the formation of carbamate. In the FTIR spectra, the appearance of vibration bands of C=O at 1649 $cm^{-1}$ and N-H at 3306 $cm^{-1}$ also indicated the formation of carbamate.
The complex formation by Taddol and diamine (at 1:1 molar ratio) was characterized by change of chemical shift of protons in $^1$H NMR spectra (Figure 13). The measurement of helical twisting power showed 40, 99 and 13 $\mu m^{-1}$ for the complex dopant, Taddol and diamine, respectively. The HTP of complex dopant was neither the simple sum nor the difference value of those of Taddol and diamine, which indicated that it was the HTP of formed complex.
While using the complex of Taddol and diamine as the chiral dopant, Taddol and diamine was mixed in E7 at a molar ratio of 1:1. The reflection band of the cholesteric film was tuned to green at a complex dopant concentration of 6 wt%. The green sample was exposed to the atmosphere of $CO_2$ for one hour. After the exposure the sample shifted from green to blue, indicating a shrinkage of the helical pitch and an increase of the helical twisting power.
As a control experiment, a green sample from a mixture with Taddol as dopant was prepared. Exposure of this sample to $CO_2$ gave no color change even over night. Meanwhile, due to the low helical twisting power of diamine (13 $\mu m^{-1}$), no sample with reflection band in visible range could be obtained using diamine as the single dopant even at a dopant concentration as high as 10%. Therefore the color change was ascribed to the de-complexation of Taddol•diamine and the recovery of the high twisting power of Taddol.

**Example 5**

Sensor responsive to temperature using vitamin E acetate as mobile component.
A sensor is prepared having a reference composition (see table 5.1) and an area having the temperature responsive area (see table 5.2)

**Reference Mixture:**

**Table 5.1:**

| | | |
|---|---|---|
| Merck RM105 | 0.70 gram | 80% |

(continued)

| | | |
|---|---|---|
| Merck RM 82 | 0.30 gram | 20% |
| Ciba Irgacure 369 | 10 mgram | 1% |
| Surfactant MP 8929 | 10 mgram | 0.6% |
| Chiral dopant CD1 | 41 mgram | 4.1% |

**Mixture with Vitamin E Acetate (=*O*-Acetyl-α-tocopherol )**

**Table 5.2:**

| | | |
|---|---|---|
| Merck RM105 | 0.70 gram | 70% |
| Merck RM 82 | 0.30 gram | 30% |
| Vitamin E Acetate | 0.07 gram | 7 % |
| Ciba Irgacure 369 | 10 mgram | 1% |
| Surfactant MP 8929 | 10 mgram | 1% |
| Chiral dopant CD1 | 41 mgram | 4.1% |

This system was inkjet printed using an appropriate solvent on a glass substrate with rubbed polyimide using a Fuji Dimatix inkjet printer. The sample had a central reflection band at 600 nm. After heating the sample to 150 ˚C, the reflection band had shifted 100 nm. A reference experiment for the same system without the mobile component Vitamin E acetate (=O-Acetyl-α-tocopherol ), showed no change alter heating to 150 ˚C.

Thermogravimetric analysis confirmed that 7 wt% of the mix starts to evaporate from 200 ˚C.

**Example 6**

A sensor responsive to temperature using Acetylsalicylic acid (aspirin) as mobile component.

Table 6.1: Materials

| | | |
|---|---|---|
| Merck RM105 | 0.70 gram | 70% |
| Merck RM 82 | 0.30 gram | 30 % |
| Asparin (acetylsalicylic acid) | 0.10 gram | 10 % |
| Irgacure 369 | 10 mgram | 1 % |
| Surfactant MP8929 | 10 mgram | 1 % |
| Chiral dopant CD1 | 39.5 mgram | 3,95 % |

This system was inkjet printed on a Fuji Dimatix inkjet printer. The sample had a central reflection band at 670 nm. After heating the sample to 130 ˚C, the reflection band had shifted 50 nm. A reference experiment for the same system without the mobile component aspirin, showed no change after heating to 130 ˚C. Thermogravimetric analysis confirmed that the mobile component starts evaporation from about 120 ˚C.

## Claims

**1.** A multifunctional optical sensor comprising a substrate and a polymeric layer comprising polymerized liquid crystal monomers having an ordered morphology, wherein the color, the reflectivity or the birefringence of the sensor changes due to a change of the morphology, wherein said change of the morphology is caused by physical contact with a chemical agent such as a gas or liquid a change of temperature, or passage of time.

**2.** The sensor according to claim 1, wherein the ordered morphology is a cholesteric morphology and the optical sensor can show a response to at least 3 different input variables.

3. Sensor according to claim 1, wherein the molecules are selected from the group consisting of water (vapour), amines, sulfides, phosphides, CO, $CO_2$, NO, $NO_2$, oxygen.

4. Sensor according to anyone of claims 1-3, wherein the substrate is a flexible substrate.

5. Sensor according to anyone of claims 1-4, wherein the sensor comprises multiple areas having different cholesteric or birefringent morphologies or molecular compositions, having different sensing functions.

6. Sensor according to anyone of claims 1-4, wherein the sensor comprises an area with a cholesteric morphology or birefringent morphology, wherein the change of the optical properties of that area is different for different molecules that are absorbed by the sensor area.

7. Sensor according to anyone of claims 1-6, wherein the sensor changes color by a shift of the reflection band to either lower or higher wavelengths by at least 5 % of the central reflective wavelength.

8. Sensor according to claim 7, wherein the shift is at least 10%

9. Sensor according to anyone of claims 1-6 wherein the reflectivity of the sensor decreases by at least 10% at the central reflection wavelength.

10. Sensor according to anyone of claims 1-9, wherein the cholesteric morphology or birefringent morphology of the wherein polymeric layer changes irreversibly upon heating the sensor above a critical temperature.

11. Sensor according to claim 10, wherein said critical temperature is the glass transition temperature of the cholesteric or birefringent morphology.

12. Sensor according to anyone of claims 1-11, wherein the polymeric layer contains a physical network comprising hydrogen bonds, ionic interactions, dipole interactions or hydrophobic interactions.

13. Sensor according to anyone of claims 1-11, wherein the polymeric layer contains a chiral dopant that changes helical twisting power upon reaction with an agent.

14. Sensor according to claim 14 wherein the chiral dopant is selected from the group consisting of a dithiol, preferably 1,1'-binaphthalene-2,2'-dithiol, a Taddol complex, or a chiral vicinal diamine.

15. Sensor according to anyone of claims 1-11, wherein the layer of polymerized liquid crystal monomers contains a mobile compound that diffuses out of the layer with the passage of time or by a change of temperature or both.

16. Sensor according to claim 15 wherein the mobile compound is a nutritional additive.

17. Process for the preparation of a sensor according to any of the above claims comprising the steps of

   a. providing a substrate or a substrate having an alignment layer
   b. applying a film of a coating composition on the substrate
   c. forming a cholesteric or birefringent liquid crystalline structure within the film
   d. applying a dose of electromagnetic radiation to the film to at least partly cure the film,
   wherein the coating composition comprises at least one liquid crystalline material having at least one polymerizable group, optionally a chiral compound and a photoinitiator.

18. The process according to claim 17, wherein the chiral compound is a chiral dopant.

19. The process according to anyone of claims 17-18, wherein the cholesteric liquid crystalline structure is aligned substantially parallel to the surface of the substrate.

20. The process according to anyone of claims 17-19, wherein the formation of the ordered morphology occurs through selfassembly.

21. The process according to anyone of claims 17-20, wherein the coating composition comprises a surfactant that

supports the formation of a monodomain morphology.

**22.** The process according to anyone of claims 17-21, wherein coating composition is deposited on the substrate with printing technology, wherein the printing technology is chosen van de group consisting of Inkjet printing, Micro contact printing, Flexo printing, Off-set printing, or Screen printing.

**23.** The process according to anyone of claims 17-22, wherein the electromagnetic radiation is UV radiation.

**24.** The process according to anyone of claims 17-23, or a polarization hologram or herein the electromagnetic radiation is patterned through a lithographic mask.

**25.** The process according to anyone of claims 17-24, wherein the polymerizable group is chosen from acrylate, methacrylate, epoxy, vinyl, vinylether, thiol-ene and oxetane groups.

**26.** The process of locally varying the morphology of the polymerized liquid crystal layer according to claim 1 by the steps of:

a. heating the polymerized liquid crystal layer above the glass transition temperature of that layer and simultaneously applying a pressure locally on the polymerized liquid crystal layer
b. cooling the polymerized liquid crystal layer to below the glass transition temperature of that layer while simultaneously keeping pressure locally on the polymerized liquid crystal layer
c. removing the pressure from the polymerized liquid crystal layer

**27.** Use of a film comprising a single substrate, a layer having a cholesteric liquid crystalline structure for application in labels for packaging of perishable goods, food, fine chemicals, bio-medical materials.

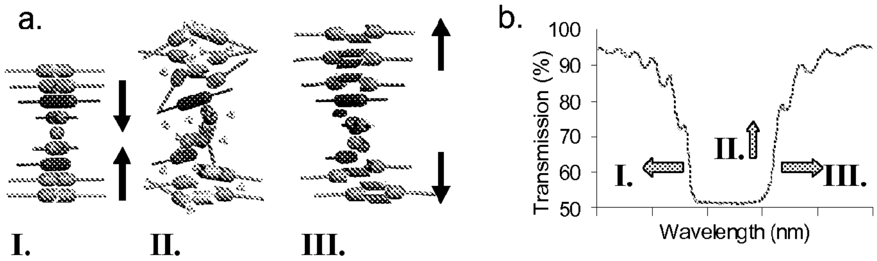


Figure 1: A schematic illustration of the change of a cholesteric network order. For clarity reasons, the polymer backbone is not drawn. The network can shrink (I), lose its order (II) or swell (III) (see (a). A schematic of the corresponding changes in transmission of isotropic light is shown in graph b.

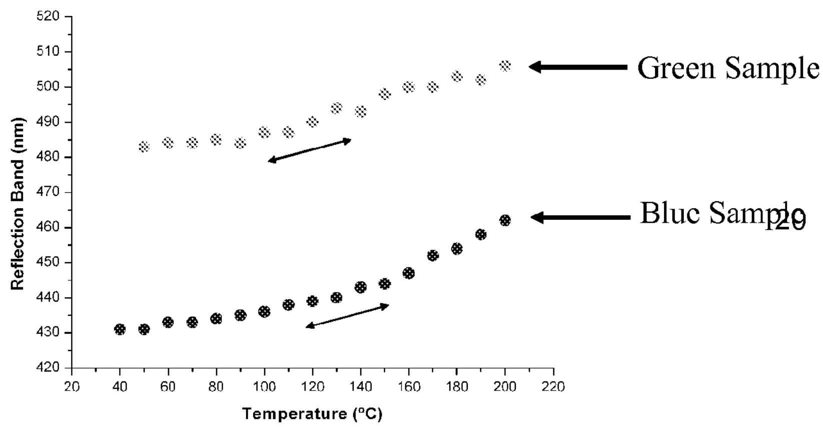


Figure 2: Relation of the reflection band as a function of temperature of comparative example 1.

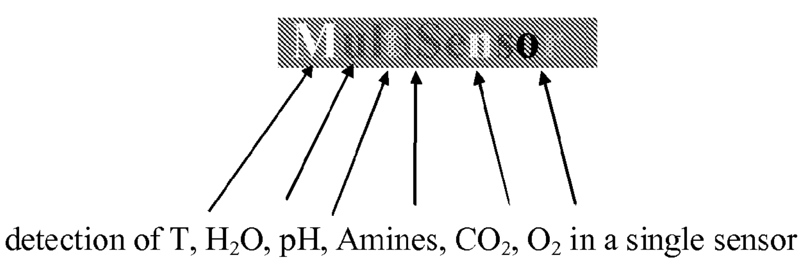


Figure 3: Example of a multifunctional sensor.

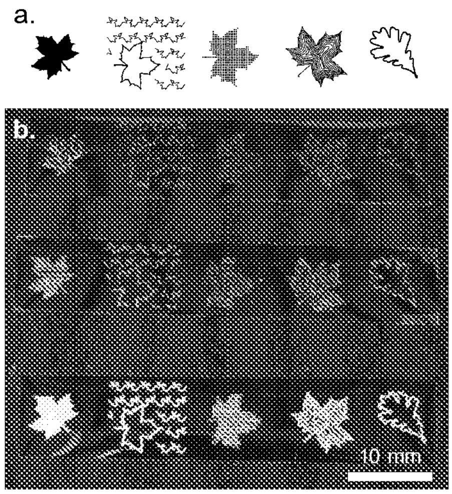


Figure 4: Representation of a sensor according to example 2.

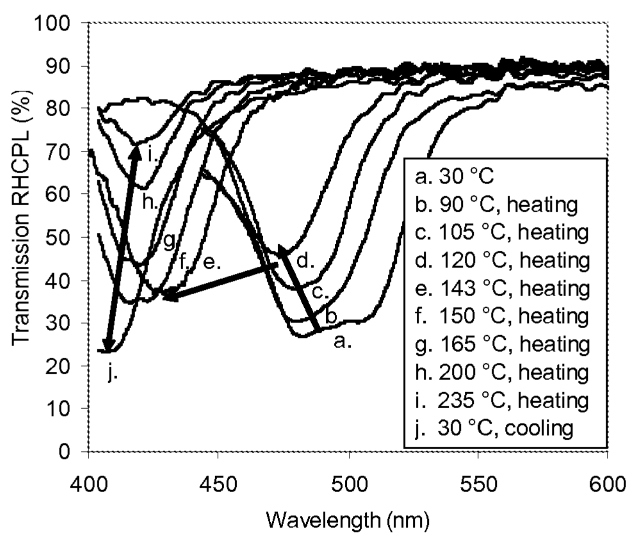


Figure 5: Transmission of right handed circularly polarized light through the sample of example 2 after time/heat treatment

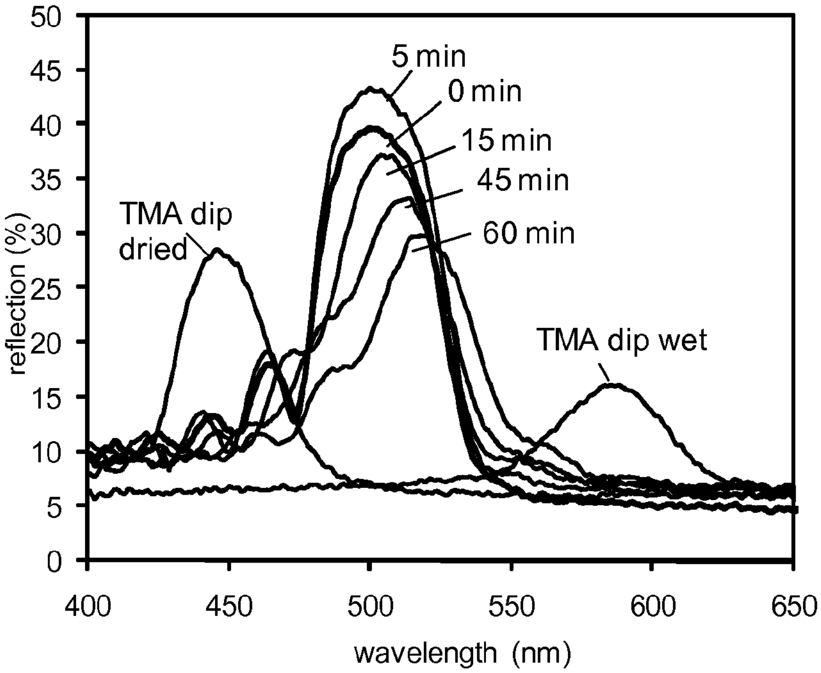


Figure 6: Reflection of light before and after treatment of a sample with trimethyl amine (example 2).

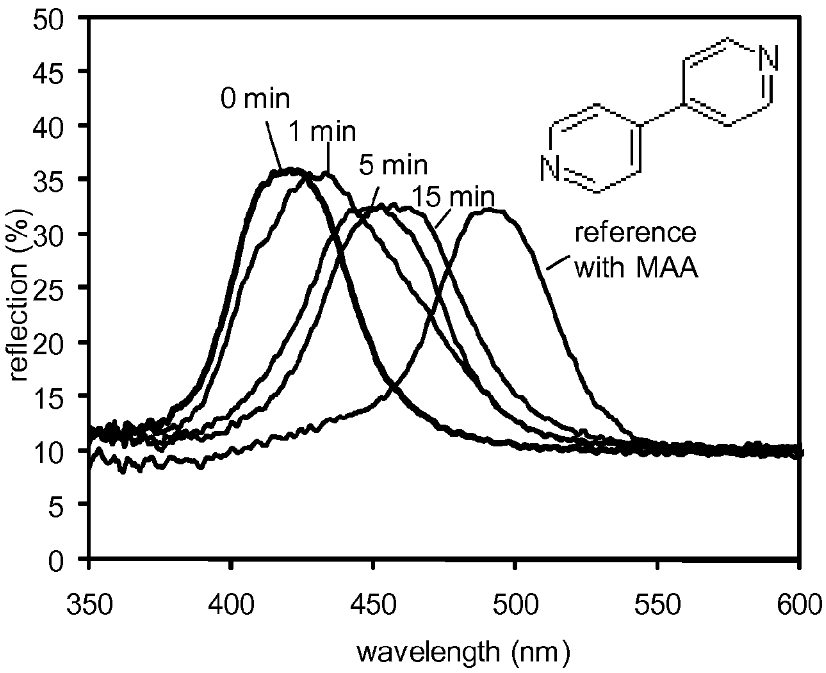


**4,4'dipyridyl**

Figure 7: UV-vis measurements of response to 4,4'Bipyridyl (measurement was done with randomly polarized light)

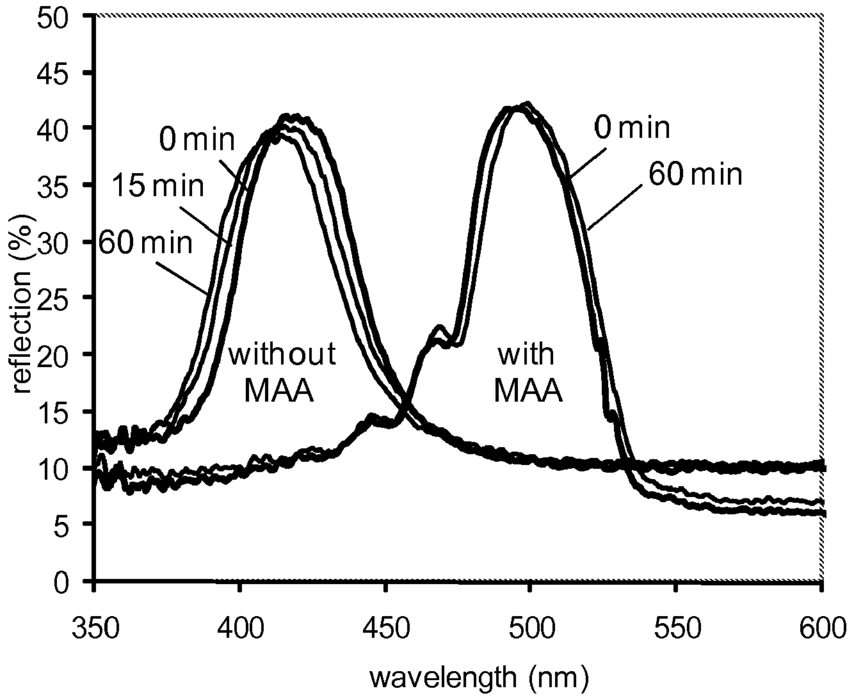


Figure 8: The effect of pure water for samples containing MAA and without MAA (example 2)

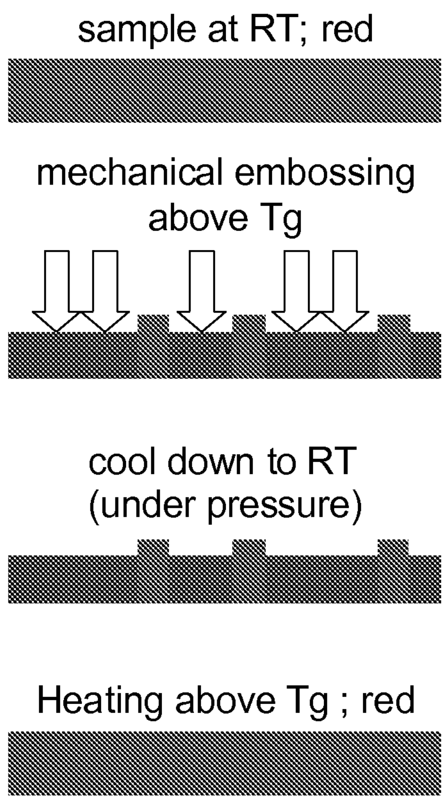


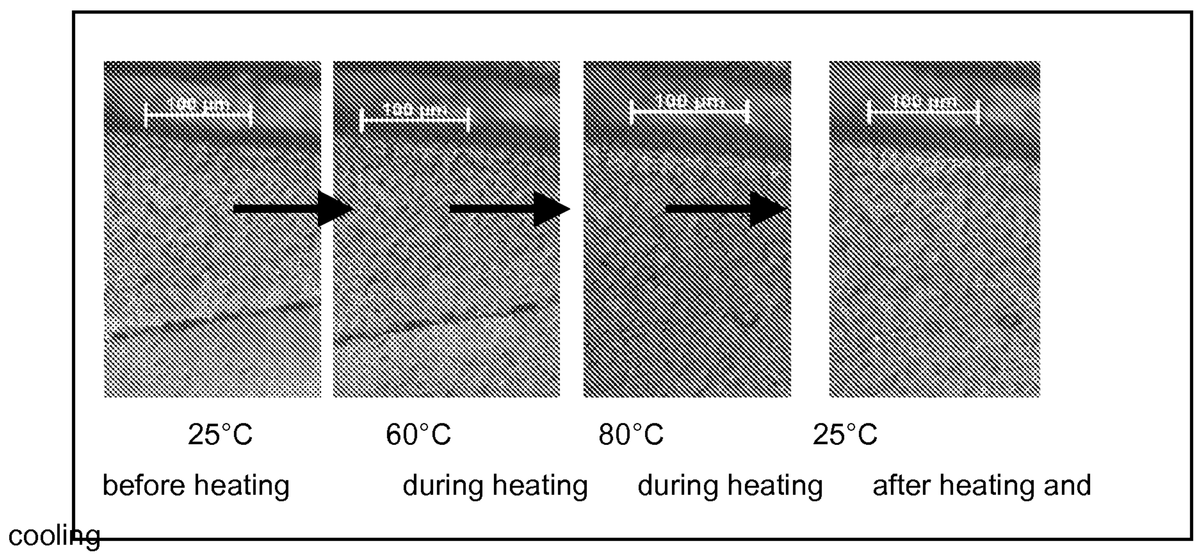


Figure 9: Pictures of the heating and cooling of a compressed sample.

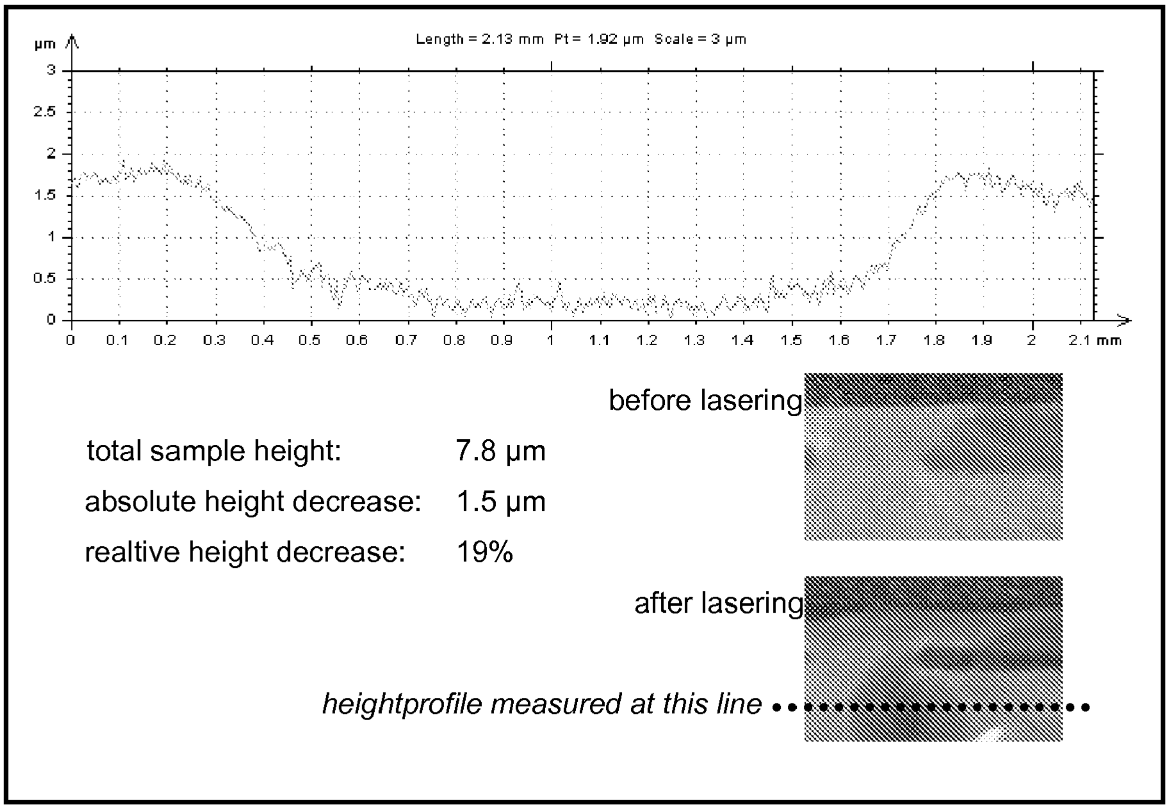


Figure 10: Local heating with laser, heightprofile, pictures of colorchange.

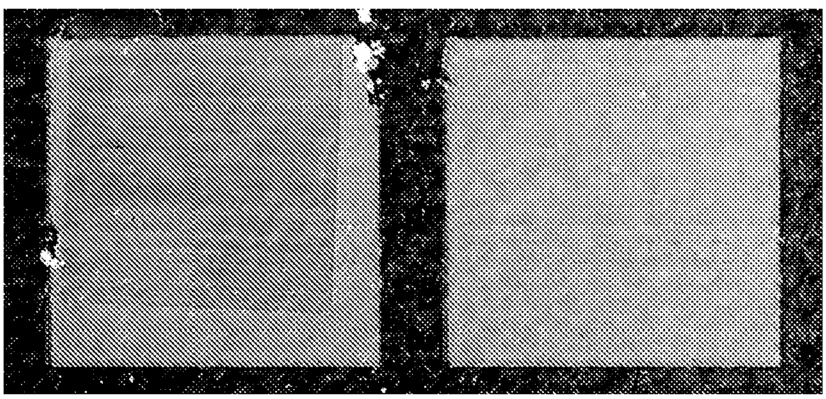

Figure 11: Laser-written sample (left) and reference sample (right).

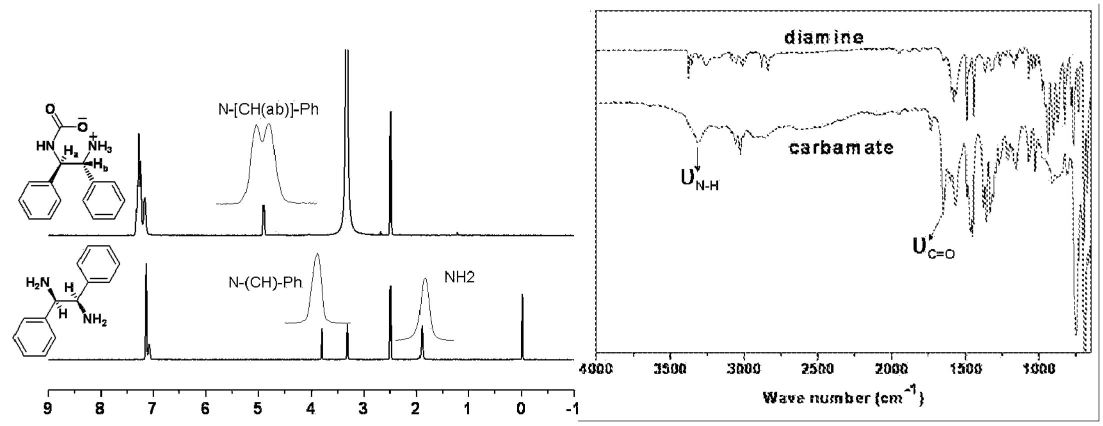


Figure 12: $^1$H NMR (left) and FTIR (right) spectra of diamine and carbamate.

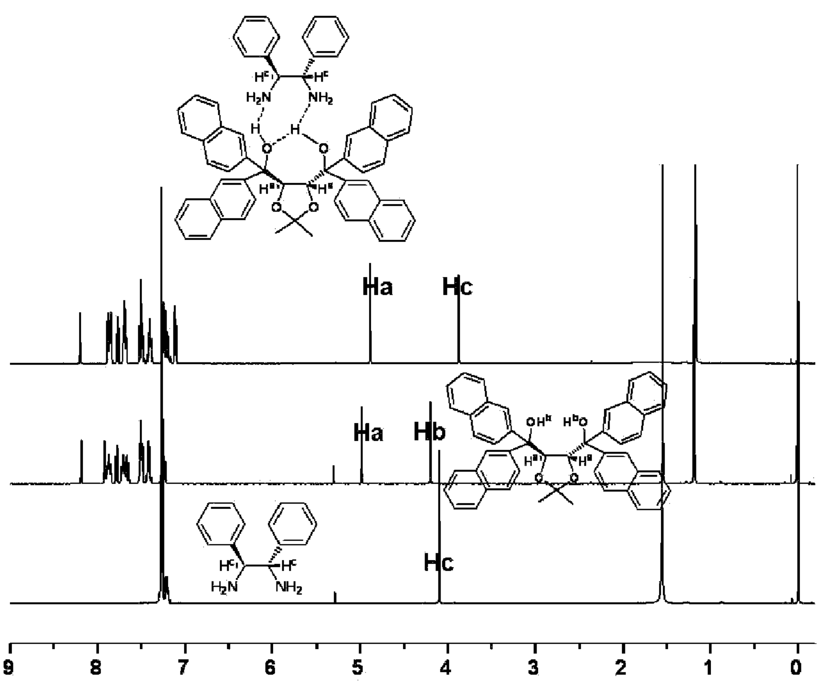


Figure 13: $^1$H NMR spectra of Taddol·diamine complex.

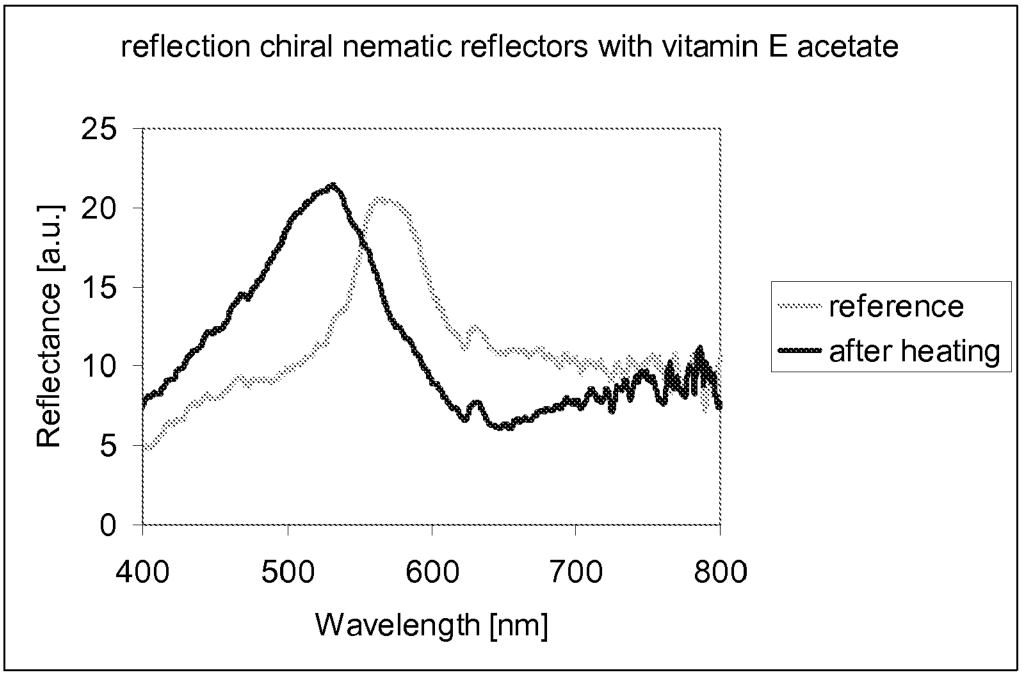


Figure 14: Spectral reflection of a sample with 7% vitamin E acetate before (light blue) and after (dark blue) heating to $150^0$C.

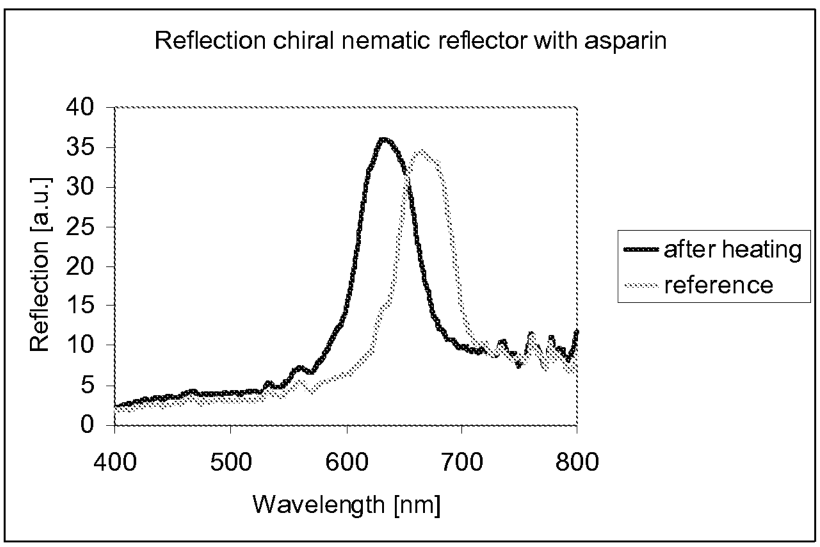


Figure 15: Spectral reflection of a sample with 10% aspirin before (light blue) and after (dark blue) heating to $130^0$C.

Europäisches Patentamt
European Patent Office
Office européen des brevets

# EUROPEAN SEARCH REPORT

Application Number
EP 09 15 1152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/194753 A1 (ABBOTT NICHOLAS LAWRENCE [US] ET AL) 16 October 2003 (2003-10-16) * abstract * * paragraphs [0015] - [0019], [0087] - [0089] * ----- | 1-27 | INV. G01K11/06 G01K11/16 G01N31/22 |
| X | US 2006/134796 A1 (BOMMARITO G M [US] ET AL) 22 June 2006 (2006-06-22) * paragraphs [0006], [0038], [0060] - [0067], [0125] - [0130] * ----- | 1-27 | |
| A | US 3 409 404 A (FERGASON JAMES L) 5 November 1968 (1968-11-05) * abstract * * column 7, line 65 - column 8, line 2 * ----- | 1-27 | |
| D,A | US 4 410 283 A (DUBOIS JEAN-CLAUDE [FR] ET AL) 18 October 1983 (1983-10-18) * abstract * ----- | 1-27 | |

TECHNICAL FIELDS SEARCHED (IPC)

G01K
G01N

The present search report has been drawn up for all claims

1

| Place of search | Date of completion of the search | Examiner |
|---|---|---|
| The Hague | 7 July 2009 | de Bakker, Michiel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 09 15 1152

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2009

| Patent document cited in search report | Publication date | Patent family member(s) | Publication date |
|---|---|---|---|
| US 2003194753 A1 | 16-10-2003 | CA 2478993 A1 | 23-10-2003 |
| | | WO 03086197 A1 | 23-10-2003 |
| | | US 2009123670 A1 | 14-05-2009 |
| | | US 2007104612 A1 | 10-05-2007 |
| US 2006134796 A1 | 22-06-2006 | NONE | |
| US 3409404 A | 05-11-1968 | GB 1041490 A | 07-09-1966 |
| | | IT 957002 B | 10-10-1973 |
| US 4410283 A | 18-10-1983 | CH 649574 A5 | 31-05-1985 |
| | | DE 3133118 A1 | 29-04-1982 |
| | | FR 2490666 A1 | 26-03-1982 |
| | | JP 57083578 A | 25-05-1982 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4410283 A
- GB 1183160 A
- US 3651695 A
- US 4597942 A
- US P4398803 A
- WO 9524454 A


### Non-patent literature cited in the description


- **Kirchner et al.** *Chem.Commun.,* 2006, 1512-1514
- **Shibaev.** *Macromolecules,* 2006, vol. 39, 3986-3992